# EUROPÄISCHE PATENTSCHRIFT

(11) **EP 4 077 000 B1**
(45) Veröffentlichungstag und Bekanntmachung des Hinweises auf die Patenterteilung: **04.10.2023**
(21) Anmeldenummer: 20811572.5
(22) Anmeldetag: 20.11.2020
(51) Int. Cl.: B60G 7/00, F16C 11/06

(54) **DREIPUNKTLENKER**
THREE-POINT SUSPENSION LINK
BRAS DE SUSPENSION À TROIS POINTS

(30) Priorität: 17.12.2019 DE 102019219830
(43) Veröffentlichungstag der Anmeldung: 26.10.2022
(73) Patentinhaber: ZF Friedrichshafen AG, 88046 Friedrichshafen (DE)
(72) Erfinder: REDDEHASE, Günter, 49448 Brockum (DE); HEEMANN, Jörg, 49356 Diepholz (DE)
(74) Vertreter: ZF Friedrichshafen AG
(86) Internationale Anmeldenummer: PCT/EP2020/082805
(87) Internationale Veröffentlichungsnummer: WO 2021/121856

(56) Entgegenhaltungen:
- WO-A1-99/28636
- WO-A2-2006/110049
- DE-A1-102017 214 963
- FR-A5- 2 131 316

## Beschreibung

Die Erfindung betrifft einen Dreipunktlenker gemäß dem Oberbegriff von Patentanspruch 1.

Achsaufhängungen von Nutzfahrzeugen, beispielsweise Nutzfahrzeuge zum gewerblichen Güter- oder Personentransport, weisen häufig Hinterachsen auf, die als Starrachsen ausgebildet sind. Derartige Starrachsen können durch einen Dreipunktlenker geführt sein, der oberhalb der Starrachse in einer oberen Lenkerebene angeordnet ist. Ein solcher Dreipunktlenker weist zwei Lenkerarme auf, die einen spitzen Winkel zueinander einschließen und die sich zugleich mit jeweils einem Ende in einem ersten Lagerpunkt treffen. In diesem ersten Lagerpunkt ist der Dreipunktlenker über ein Zentralgelenk an einen Starrachskörper der Starrachse angebunden, wobei das Zentralgelenk dem Dreipunktlenker zugeordnet und als ein Kugelgelenk ausgebildet ist. Die beiden anderen Enden des Dreipunktlenkers sind über je ein Führungsgelenk, beispielsweise ein sogenanntes Molekulargelenk, an einen Fahrzeugrahmen angebunden. Das Zentralgelenk lässt Wankbewegungen, also Drehbewegungen um die Fahrzeuglängsachse, sowie Ein- und Ausfederbewegungen der Starrachse zu. Darüber hinaus werden über das Zentralgelenk Antriebs- und Bremsmomente in den Dreipunktlenker eingeleitet, wenn die Starrachse als eine Antriebsachse ausgebildet ist.

Aufgrund von erhöhtem Verschleiß oder Überlastung des Zentralgelenks können sich Verbindungen zwischen Einzelteilen des Zentralgelenks auflösen. Insbesondere können sich ein Innenring und/oder ein Außenring eines innerhalb des Zentralgelenks angeordneten Kugelgelenks derart stark abnutzen, dass sich diese normalerweise formschlüssig miteinander verbundenen Teile voneinander trennen. Infolge eines solchen Schadensereignisses könnte sich die über das Zentralgelenk realisierte Verbindung zwischen dem Dreipunktlenker und dem Starrachskörper lösen. Man spricht in diesem Zusammenhang auch von einem Separieren des Zentralgelenks, was mit hohen Sachschäden und möglicherweise sogar Personenschäden einhergehen kann. Aus dem Stand der Technik sind daher Verliersicherungen bekannt, die eine vollständige Separation des Zentralgelenks verhindern sollen.

Beispielsweise ist aus der DE 10 2017 214 963 A1 ein Dreipunktlenker mit einem Zentralgelenk bekannt, welches ein Gehäuse aufweist, das durch ein Kugelgelenk dreh- und schwenkbeweglich gegenüber einer Achsanbindung des Zentralgelenks gelagert ist. Ferner weist das Zentralgelenk eine als Anschlag fungierende Verliersicherung auf, die sich senkrecht zu der Mittelachse der Achsanbindung erstreckt und bei Versagen des Kugelgelenks ein Separieren von Gehäuse und Achsanbindung unterbindet. Ein Sicherungselement, das als ein Sicherungsring mit rechteckigem Querschnitt ausgebildet ist, stellt eine Axialsicherung dar und verhindert ein Abziehen der Verliersicherung in Richtung der Mittelachse der Achsanbindung. Die Achsanbindung weist einen zylindrisch geformten Dom auf, der eine Mittelachse aufweist, die deckungsgleich mit der Mittelachse der Achsanbindung ist. Der Sicherungsring mit rechteckigem Querschnitt greift in eine umlaufende, ebenfalls rechteckig ausgebildete, Nut des zylindrischen Doms ein. Bei einer derartigen Anordnung besteht in einem Fahrbetrieb die Gefahr eines sogenannten Ausknüpfens des Sicherungsrings, womit gemeint ist, dass sich der Sicherungsring aus der Nut des zylindrischen Doms herausarbeitet, was auch als herauswandern bezeichnet wird. Darüber hinaus können bei einer derartigen Anordnung im Fahrbetrieb unerwünschte Klappergeräusche auftreten, beispielsweise bei einem Wechsel von einem Beschleunigungsvorgang zu einem Bremsvorgang oder umgekehrt. Diese Klappergeräusche liegen in einer geringfügigen, toleranzbedingen Bewegungsmöglichkeit der Verliersicherung in Richtung der Mittelachse des Doms begründet.

Aufgabe der Erfindung ist es, eine Anordnung bereitzustellen, durch die ein Ausknüpfen des Sicherungselements aus der umlaufenden Nut des Doms unterbunden wird.

Diese Aufgabe wird gemäß der vorliegenden Erfindung gelöst durch einen Dreipunktlenker mit den Merkmalen des unabhängigen Anspruchs 1.

Bevorzugte Ausführungsformen und Weiterbildungen sind Gegenstand der Unteransprüche. Weitere Merkmale und Details der Erfindung ergeben sich aus der Beschreibung und aus den Zeichnungsfiguren.

Die Erfindung sieht demnach einen Dreipunktlenker vor, der zwei Lenkerarme aufweist, die einen spitzen Winkel zueinander einschließen und die sich zugleich mit jeweils einem Ende in einem Zentralgelenk treffen. Das Zentralgelenk weist einen zylindrischen Dom auf, der sich in einer Axialrichtung erstreckt, die sich zumindest im Wesentlichen senkrecht zu einer durch die beiden Lenkerarme aufgespannten Ebene erstreckt. Ferner weist das Zentralgelenk eine Gelenkkugel auf, die von dem Dom durchdrungen ist. Zur Unterbindung einer vollständigen Separation desselben, weist das Zentralgelenk eine als Anschlag fungierende Verliersicherung auf, die sich in einer senkrecht zu der Axialrichtung orientierten Radialrichtung erstreckt. Die Verliersicherung ist ebenfalls von dem Dom durchdrungen und ist zugleich durch ein ringförmiges Sicherungselement gegen ein axiales Abziehen von dem Dom gesichert. Das ringförmige Sicherungselement ist, bei Betrachtung in Axialrichtung, auf einer der Gelenkkugel abgewandten Seite der Verliersicherung angeordnet und greift zugleich in eine umlaufende Nut des Doms ein. Erfindungsgemäß ist das ringförmige Sicherungselement in der Radialrichtung von der Verliersicherung anliegend eingefasst, so dass ein Ausknüpfen des ringförmigen Sicherungselements aus der umlaufenden Nut des Doms unterbunden ist, weil sich das ringförmige Sicherungselement in der Radialrichtung nicht aus der umlaufenden Nut des Doms herausbewegen kann.

Mit anderen Worten ausgedrückt, handelt es sich bei dem Dreipunktlenker um einen V-förmig gespreizten Dreipunktlenker. Insbesondere ist der Dreipunktlenker Bestandteil eines Fahrwerks eines Nutzfahrzeugs. Insbesondere ist das ringförmige Sicherungselement in der Radialrichtung derart von der Verliersicherung anliegend eingefasst, dass sich das ringförmige Sicherungselement und die Verliersicherung punktförmig, linienförmig oder flächenförmig berühren. Insbesondere weist das ringförmige Sicherungselement eine umfängliche Unterbrechung auf, um ein Einsetzen in die umlaufende Nut des zylindrischen Doms zu ermöglichen. Insbesondere weist das ringförmige Sicherungselement einen massiven Vollquerschnitt auf. Vorzugsweise besteht das ringförmige Sicherungselement aus einem hochfesten Federstahl. Insbesondere überdeckt die Verliersicherung die Gelenkkugel, bei Betrachtung in einer Parallelprojektion in Axialrichtung, zumindest teilweise. Darüber hinaus kann die Verliersicherung, ebenfalls bei Betrachtung in einer Parallelprojektion in Axialrichtung, zusätzlich noch Teile einer Innenkontur eines Gehäuses des Zentralgelenks überdecken.

Insbesondere ist die, vorzugsweise aus Stahl bestehende, Gelenkkugel Bestandteil eines Kugelgelenks und wird daher auch als Innenring des Kugelgelenks bezeichnet. Die Verliersicherung kann sich in der Radialrichtung wirksam in einer Raumrichtung, beispielsweise in Form eines Querriegels, oder zwei Raumrichtungen, beispielsweise in Form einer Scheibe, erstrecken. Insbesondere weist die Verliersicherung eine durchgehende, sich in der Axialrichtung erstreckende, zylindrische Bohrung auf, deren Innendurchmesser kleiner ist als ein maximaler Außendurchmesser des ringförmigen Sicherungselements.

Vorzugsweise ist das ringförmige Sicherungselement in der Radialrichtung zumindest im Wesentlichen umlaufend von der Verliersicherung eingefasst. Durch die umlaufende Einfassung des ringförmigen Sicherungselements wird die Sicherheit gegen ein Ausknüpfen des ringförmigen Sicherungselements zusätzlich erhöht; beispielsweise gegenüber einer lediglich partiellen umfänglichen Einfassung.

Zweckmäßig weist das ringförmige Sicherungselement einen kreisrunden Vollquerschnitt auf. Insbesondere ist das ringförmige Sicherungselement als ein umfänglich unterbrochener Torus ausgebildet. Beispielsweise kann das ringförmige Sicherungselement als ein Runddraht-Sprengring für Wellen gemäß DIN 7993, Form A, ausgebildet sein.

Vorteilhaft liegt die Verliersicherung vollflächig an dem ringförmigen Sicherungselement an. Durch eine solche vollflächige Anlage wird die Sicherheit gegen ein Ausknüpfen des ringförmigen Sicherungselements zusätzlich erhöht.

Weiterhin vorteilhaft liegt das ringförmige Sicherungselement vollflächig an der umlaufenden Nut des zylindrischen Doms an. Insbesondere ist die Hälfte der Querschnittsfläche des ringförmigen Sicherungselements in der umlaufenden Nut des zylindrischen Doms angeordnet. Insbesondere ist der Querschnittsanteil des ringförmigen Sicherungselements, der in der umlaufenden Nut des zylindrischen Doms angeordnet ist, halbkreisförmig ausgebildet.

Bevorzugt liegt das ringförmige Sicherungselement unter Ausbildung einer den Dom zumindest im Wesentlichen umlaufenden Kontaktfläche an der Verliersicherung an, wobei die Kontaktfläche, bei Betrachtung in einem Axialschnitt durch das Zentralgelenk, als ein Viertelkreisbogen ausgebildet ist. Insbesondere ist die den Dom zumindest im Wesentlichen umlaufende Kontaktfläche an einer Stelle umfänglich unterbrochen, wenn das ringförmige Sicherungselement als ein umfänglich unterbrochener Torus ausgebildet ist. Beispielsweise können der Außendurchmesser des zylindrischen Doms sowie der Innendurchmesser der Verliersicherung einen Durchmesser von 28 Millimeter aufweisen, wobei beide Durchmesser derart toleriert sind, dass zwischen den beiden vorgenannten Bauteilen ein umlaufender, größenordnungsmäßig 0,05 Millimeter breiter Spalt ausgebildet ist. Das ringförmige Sicherungselement kann bei einer derartigen Dimensionierung beispielsweise als ein umfänglich unterbrochener Torus aus hochfestem Federstahl mit einem Vollreisquerschnitt von 2 Millimeter Durchmesser ausgebildet sein. Eine solche Ausbildung des ringförmigen Sicherungselements ist auch aus DIN 7993, Form A (Runddraht-Sprengringe für Wellen) bekannt. Praktische Versuche der Anmelderin mit einer derartigen Anordnung haben gezeigt, dass das torusförmige Sicherungselement aus Federstahl bei einer stetigen Erhöhung einer in Axialrichtung des Zentralgelenks wirkenden Kraft im Versagensfall unter Ausbildung einer zylindermantelförmigen Scherfläche von 28 Millimeter Durchmesser und 2 Millimeter Erstreckung in der Axialrichtung abschert.

Gemäß einer Weiterbildung ist die Verliersicherung durch ein Federelement in der Axialrichtung vorgespannt. Insbesondere umschließt des Federelement dabei den Dom. Vorzugsweise umschließt des Federelement dabei den Dom unterbrechungsfrei. Durch das Federelement können die eingangs beschriebenen, unerwünschten Klappergeräusche unterbunden werden, die im Fahrbetrieb beispielsweise bei einem Wechsel von einem Beschleunigungsvorgang zu einem Bremsvorgang oder umgekehrt auftreten können. Das Federelement kann beispielsweise als eine Tellerfeder, als ein Federring oder als eine Fächerscheibe ausgebildet sein. Das Federelement kann auch aus mehreren einzelnen Federelementen gebildet sein, die, beispielsweise durch ein Stapeln in der Axialrichtung, zu einem Federpaket angeordnet sind.

Vorzugsweise ist das Federelement als ein O-Ring aus einem Elastomermaterial ausgebildet. Derartige O-Ringe werden auch als Runddichtringe bezeichnet und können als Normteile, beispielsweise nach DIN 3770, bezogen werden, wodurch sich insbesondere bei kleinen Stückzahlen ein Kostenvorteil ergibt.

Bevorzugt ist ein die Verliersicherung in der Axialrichtung vorspannendes Federelement zur Ermöglichung einer Montage des ringförmigen Sicherungselements in Axialrichtung um mindestens die halbe, in Axialrichtung gemessene, Dicke des ringförmigen Sicherungselements zusammendrückbar. Auf diese Weise kann das zuvor beispielhaft beschriebene, ringförmige Sicherungselement, das als ein umfänglich unterbrochener Torus aus hochfestem Federstahl mit einem Vollreisquerschnitt von 2 Millimeter Durchmesser ausgebildet ist, durch ein axiales Zusammendrücken des Federelements um mindestens 1 Millimeter in die umlaufende Nut des Doms eingesetzt werden. Nach einer anschließenden Entlastung des Federelements ist das torusförmige Sicherungselement formschlüssig und zugleich mit einem Viertel seiner Umfangsfläche anliegend von der Verliersicherung umgriffen. Vorzugsweise ist das Federelement allerdings in Axialrichtung um mehr als die halbe, in Axialrichtung gemessene, Dicke des ringförmigen Sicherungselements zusammendrückbar, um die Montage zu erleichtern.

Gemäß einer Weiterbildung der Erfindung ist das Federelement sowohl von dem Dom als auch von der Verliersicherung jeweils in Axialrichtung und zugleich auch in Radialrichtung eingefasst. Durch diese Anordnung kann unter anderem auch ein toleranzbedingtes Spiel zwischen einer Innenbohrung der Verliersicherung und einem diese Innenbohrung aufnehmenden Absatz des zylindrischen Doms aufgefangen und somit in einem Fahrbetrieb einem Klappern in der Radialrichtung entgegengewirkt werden. Insbesondere ist das Federelement zumindest im Wesentlichen vollumfänglich von dem Dom und von der Verliersicherung eingefasst. Vorzugsweise ist das Federelement dabei zumindest im Wesentlichen hälftig von dem Dom und hälftig von der Verliersicherung eingefasst. Durch eine derartige Einfassung des Federelements ist dieses wirkungsvoll vor Beschädigung und vor Schmutz geschützt.

Vorteilhaft ist ein die Verliersicherung in der Axialrichtung vorspannendes Federelement zwischen der Verliersicherung und einem umlaufenden Absatz des Doms angeordnet. Auf diese Weise kann sich das Federelement in der Axialrichtung unmittelbar an dem Dom abstützen, ohne dass hierzu weitere Bauteile erforderlich wären. Insbesondere erstreckt sich der umlaufende Absatz des Doms in der Radialrichtung.

Bevorzugt weist die Verliersicherung im Bereich des umlaufenden Absatzes des Doms einen Innendurchmesser auf, der größer ist als ein Außendurchmesser des umlaufenden Absatzes des Doms. Auf diese Weise kann die Verliersicherung beim Zusammendrücken des Federelements im Rahmen der Montage des ringförmigen Sicherungselements in Axialrichtung des Zentralgelenks über den Absatz hinaus bewegt werden. Insbesondere befindet sich eine der Gelenkkugel zugewandte Kreisringfläche der Verliersicherung in einem montierten Zustand des Zentralgelenks in Axialrichtung zumindest im Wesentlichen auf gleicher Höhe wie der Absatz des Doms. Dadurch ist das Federelement im montierten Zustand des Zentralgelenks wirkungsvoll vor Beschädigung und vor Schmutz geschützt. Insbesondere erstreckt sich die vorgenannte Kreisringfläche, die bei einer drohenden Separation des Zentralgelenks als eine Anschlagfläche fungiert, in der Radialrichtung.

Eine vorteilhafte Weiterbildung der Erfindung sieht vor, dass der Dreipunktlenker als ein Achsführungslenker zur Führung einer Starrachse ausgebildet ist.

Zweckmäßig ist der Dom einstückig mit einer Flanschplatte zur Anbindung des Zentralgelenks an die Starrachse ausgebildet. Aufgrund der ein stückigen Ausbildung kann an dieser Stelle keine Separation des Zentralgelenks auftreten und es ist daher auch kein zusätzlicher Aufwand erforderlich, um dies zu verhindern.

Im Folgenden wird die Erfindung anhand lediglich Ausführungsbeispiele darstellender Zeichnungen näher erläutert, wobei sich gleiche Bezugszeichen auf gleiche, ähnliche oder funktional gleiche Bauteile oder Elemente beziehen. Dabei zeigt:
Fig. 1 eine perspektivische Darstellung einer Fahrwerkanordnung gemäß dem Stand der Technik;
Fig. 2 in einer perspektivischen Ansicht von schräg oben einen Dreipunktlenker gemäß der Erfindung;
Fig. 3 in einem Halbschnitt mit Detailvergrößerung ein Zentralgelenk des Dreipunktlenkers aus Figur 2 gemäß einer ersten Ausführungsform der Erfindung;
Fig. 4 in einem Halbschnitt mit Detailvergrößerung ähnlich Figur 3 ein Zentralgelenk des Dreipunktlenkers aus Figur 2 gemäß einer zweiten Ausführungsform der Erfindung;
Fig. 5 eine Schnittdarstellung eines Zentralgelenks gemäß dem Stand der Technik und
Fig. 6 in einer Draufsicht ein ringförmiges Sicherungselement gemäß der Erfindung.

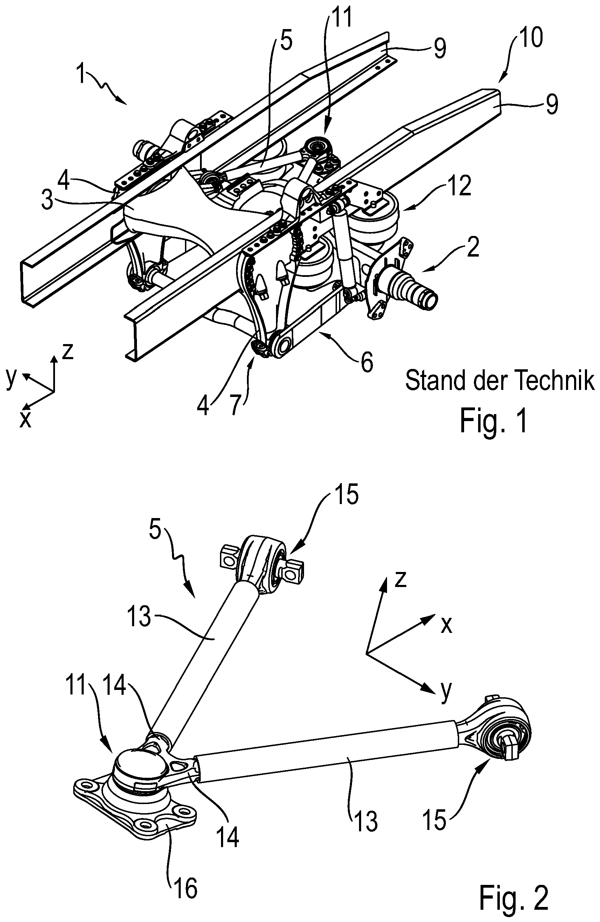

Fig. 1 zeigt eine Fahrwerkanordnung 1 mit einer gezogenen Antriebsachse, welche als eine Starrachse ausgebildet ist und einen Starrachskörper 2 aufweist. Bezogen auf eine positive Fahrzeuglängsrichtung x, die der Vorwärtsfahrtrichtung entspricht, ist die Starrachse hinter einem sich in einer Fahrzeugquerrichtung y erstreckenden Querträger 3 und pro Fahrzeugseite einer sich im Wesentlichen in einer Fahrzeughochrichtung z erstreckenden Stütze 4 angeordnet. In einer, bezogen auf die positive Fahrzeughochrichtung z, oberen Lenkerebene wird die Starrachse von einem V-förmig gespreizten und sich im Wesentlichen in Fahrzeuglängsrichtung x erstreckenden Achsführungslenker gezogen, welcher als ein Dreipunktlenker 5 ausgebildet ist. Der Dreipunktlenker 5 ist symmetrisch in Bezug auf eine Ebene ausgebildet, die durch die Fahrzeuglängsrichtung x und die Fahrzeughochrichtung z aufgespannt wird, und weist zwei Molekulargelenke auf, über die er an den Querträger 3 angebunden ist. Darüber hinaus weist der Dreipunktlenker 5 ein Zentralgelenk 11 zur dreh- und schwenkbeweglichen Anbindung des Dreipunktlenkers 5 an den Starrachskörper 2 auf, wobei die Dreh- und Schwenkbewegungen durch ein innerhalb des Zentralgelenks 11 angeordnetes Kugelgelenk ermöglicht werden. Das Zentralgelenk 11 bewegt sich während des Fahrbetriebs aufgrund von Ein- und Ausfederbewegungen des Starrachskörpers 2 im Wesentlichen in der Fahrzeughochrichtung z auf und ab.

In einer unteren Lenkerebene wird die Starrachse durch zwei in Fahrzeugquerrichtung y parallel zueinander, jeweils fahrzeugaußenseitig angeordnete und sich in Fahrzeuglängsrichtung x erstreckende Längslenker 6 gezogen. Die Längslenker 6 sind jeweils einenends an den Starrachskörper 2 und jeweils andernends an einen unteren Krafteinleitungsbereich 7 einer der beiden Stützen 4 angebunden. Die Endbereiche der Längslenker 6 sind gegenüber dem unteren Krafteinleitungsbereich 7 und dem Starrachskörper 2 jeweils um eine sich in Fahrzeugquerrichtung y erstreckende Schwenkachse schwenkbar. Die Fahrwerkanordnung 1 weist pro Fahrzeugseite jeweils einen Längsträger 9 auf, an dem sich der Starrachskörper 2 über Luftfedern 12 abstützt. Die beiden Längsträger 9 erstrecken sich in Fahrzeuglängsrichtung x parallel zueinander und sind gemeinsam mit dem Querträger 3 Bestandteil eines Fahrzeugrahmens 10. Im Folgenden werden die Begriffe Fahrzeuglängsrichtung x, Fahrzeugquerrichtung y und Fahrzeughochrichtung z analog zu Fig. 1 verwendet.

Fig. 2 zeigt einen V-förmig gespreizt ausgebildeten Dreipunktlenker 5 eines Nutzfahrzeugs, der zwei rohrförmige Lenkerarme 13 aufweist, die einen spitzen Winkel zueinander einschließen und die sich mit jeweils einem Ende in einem Zentralgelenk 11 treffen. Dabei sind die beiden Lenkerarme 13 jeweils starr an einen von zwei Schäften 14 des Zentralgelenks 11 angebunden. Jeder der beiden Lenkerarme 13 ist an seinem freien Ende starr mit einem Führungsgelenk verbunden, das jeweils als ein Molekulargelenk 15 ausgebildet ist. Über die Molekulargelenke 15 ist der Dreipunktlenker 5 an einen Fahrzeugrahmen 10 und über eine Flanschplatte 16 des Zentralgelenks 11 an eine Starrachse anbindbar. Somit ist der Dreipunktlenker 5 als ein Achsführungslenker zur Führung einer Starrachse ausgebildet.

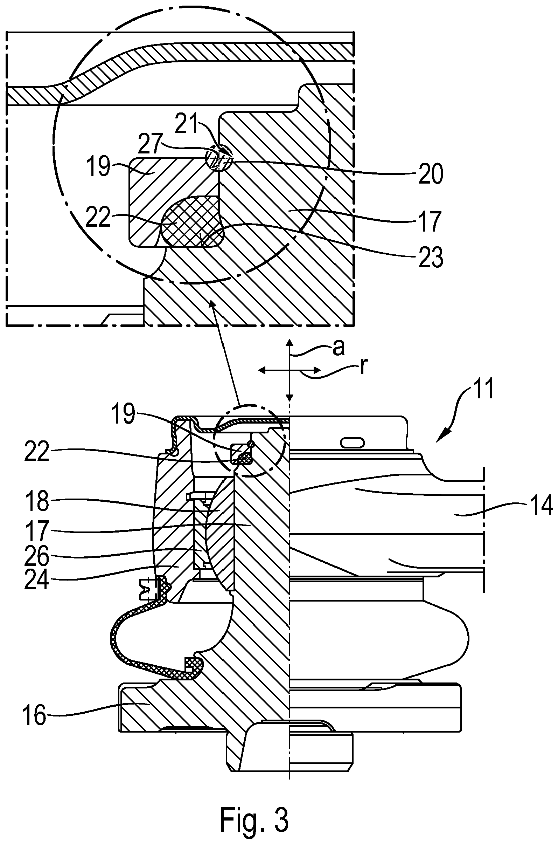

Wie in Fig. 3 zu erkennen ist, weist das Zentralgelenk 11 einen zylindrischen Dom 17 auf, der sich in einer Axialrichtung a erstreckt, die sich im Wesentlichen senkrecht zu einer durch die beiden Lenkerarme 13 aufgespannten Ebene erstreckt. Dabei erstreckt sich die Axialrichtung a in der dargestellten, nicht ausgelenkten Nulllage des Zentralgelenks 11 nicht exakt senkrecht zu der durch die beiden Lenkerarme 13 aufgespannten Ebene, sondern weicht hiervon um 10 Grad ab. Diese Abweichung ist erforderlich, damit die Bauteile des Zentralgelenks 11, die sich im Einbauzustand des Dreipunktlenkers 5 bei einem Ein- und Ausfedern eines Starrachskörpers 2 während eines Fahrbetriebs relativ zueinander bewegen, nicht kollidieren. Die nicht ausgelenkte Nulllage des Zentralgelenks 11 stellt vorliegend zugleich die Einbaulage in einem unbeladenen Nutzfahrzeug dar. Das Zentralgelenk 11 weist eine Gelenkkugel 18 auf, die zugleich einen Innenring eines Kugelgelenks darstellt und die von dem Dom 17 durchdrungen ist. Zur Unterbindung einer vollständigen Separation des Zentralgelenks 11, weist das Zentralgelenk 11 eine Verliersicherung 19 auf, die sich in einer senkrecht zu der Axialrichtung a orientierten Radialrichtung r erstreckt. Die Verliersicherung 19 ist ebenfalls von dem Dom 17 durchdrungen und ist zugleich durch ein ringförmiges Sicherungselement 20 gegen ein axiales Abziehen von dem Dom 17 gesichert. Das ringförmige Sicherungselement 20 ist, bei Betrachtung in Axialrichtung a, auf einer der Gelenkkugel 18 abgewandten Seite der Verliersicherung 19 angeordnet und greift zugleich in eine umlaufende Nut 21 des Doms 17 ein. Das ringförmige Sicherungselement 20 ist in der Radialrichtung r von der Verliersicherung 19 anliegend eingefasst, so dass ein Ausknüpfen des ringförmigen Sicherungselements 20 aus der umlaufenden Nut 21 des Doms 17 unterbunden ist, weil sich das ringförmige Sicherungselement 20 in der Radialrichtung r nicht aus der umlaufenden Nut 21 des Doms 17 herausbewegen kann.

Das ringförmige Sicherungselement 20 ist in der Radialrichtung r nahezu vollständig umlaufend von der Verliersicherung 19 eingefasst, wobei das ringförmige Sicherungselement 19 eine umfängliche Unterbrechung aufweist, die erforderlich ist, um ein Einsetzen des ringförmigen Sicherungselements 19 in die umlaufende Nut 21 des zylindrischen Doms 17 zu ermöglichen. Die Verliersicherung 19 liegt derart vollflächig an dem ringförmigen Sicherungselement 20 an, dass das ringförmige Sicherungselement 20 wiederum unter Ausbildung einer den Dom 17 im Wesentlichen umlaufenden Kontaktfläche an der Verliersicherung 19 anliegt. Dabei ist diese Kontaktfläche, bei Betrachtung in einem Axialschnitt durch das Zentralgelenk 11, als ein Viertelkreisbogen ausgebildet. Das ringförmige Sicherungselement 20, das torusförmig ausgebildet ist und zugleich einen kreisrunden Vollquerschnitt aufweist, liegt vollflächig an der umlaufenden Nut 21 des zylindrischen Doms 17 an. Dabei liegt das ringförmige Sicherungselement 20 unter Ausbildung einer den Dom 17 umlaufenden Kontaktfläche an der Nut 21 des zylindrischen Doms 17 an, wobei diese Kontaktfläche, bei Betrachtung in einem Axialschnitt durch das Zentralgelenk 11, als ein Halbkreisbogen ausgebildet ist. Somit ist das ringförmige Sicherungselement 20 durch die umlaufende Nut 21 des zylindrischen Doms 17 und durch die Verliersicherung 19 insgesamt zu 3/4 seiner gesamten Außenumfangsfläche formschlüssig anliegend eingefasst. Oder - mit anderen Worten ausgedrückt - nur 1/4 der gesamten Außenumfangsfläche des ringförmigen Sicherungselements 20 liegt frei.

In Axialrichtung a ist die Verliersicherung 19 durch ein Federelement 22 vorgespannt, wobei das Federelement als ein O-Ring 22 aus einem Elastomermaterial ausgebildet ist. In der Axialrichtung a ist der O-Ring 22 um etwas mehr als die habe Dicke des ringförmigen Sicherungselements 20 zusammendrückbar, um die Montage des ringförmigen Sicherungselements 20 zu ermöglichen. Das Federelement 22 ist sowohl von dem Dom 17 als auch von der Verliersicherung 19 jeweils in Axialrichtung a und zugleich auch in Radialrichtung r eingefasst. Das die Verliersicherung 19 in der Axialrichtung a vorspannende Federelement 22 ist zwischen der Verliersicherung 19 und einem umlaufenden Absatz 23 des Doms 17 angeordnet, wobei sich der umlaufende Absatz 23 in der Radialrichtung r erstreckt. Im Bereich des umlaufenden Absatzes 23 des Doms 17 weist die Verliersicherung 19 einen Innendurchmesser auf, der größer ist als der Außendurchmesser des umlaufenden Absatzes 23 des Doms 17. Auf diese Weise kann die Verliersicherung 19 beim Zusammendrücken des Federelements 22 im Rahmen der Montage des ringförmigen Sicherungselements 20 in Axialrichtung a des Zentralgelenks 11 über den Absatz 23 hinaus bewegt werden. In dem dargestellten montierten Zustand des Zentralgelenks 11 befindet sich eine der Gelenkkugel 18 zugewandte Kreisringfläche der Verliersicherung 19 in Axialrichtung a auf gleicher Höhe wie der Absatz 23 des Doms 17. Zugleich erstreckt sich die vorgenannte Kreisringfläche, die bei einer drohenden Separation des Zentralgelenks 11 als eine Anschlagfläche für die Gelenkkugel 18 fungieren würde, in der Radialrichtung r.

Bei Betrachtung in einer Parallelprojektion in Axialrichtung a überdeckt die Verliersicherung 19 die Gelenkkugel 18 teilweise. Dadurch ist im montierten Zustand des Zentralgelenks 11 ein axiales Abziehen der Gelenkkugel 18 von dem Dom 17 allenfalls nach einem vorherigen Abscheren des torusförmigen Sicherungselements 20 aus hochfestem Federstahl unter Ausbildung einer zylindermantelförmigen Scherfläche möglich. Der Dreipunktlenker 5 ist als ein Achsführungslenker zur Führung einer Starrachse mit einem Starrachskörper 2 analog zu Fig. 1 ausgebildet. Zugleich ist der Dom 17 einstückig mit der Flanschplatte 16 zur Anbindung des Zentralgelenks 11 an die Starrachse ausgebildet.

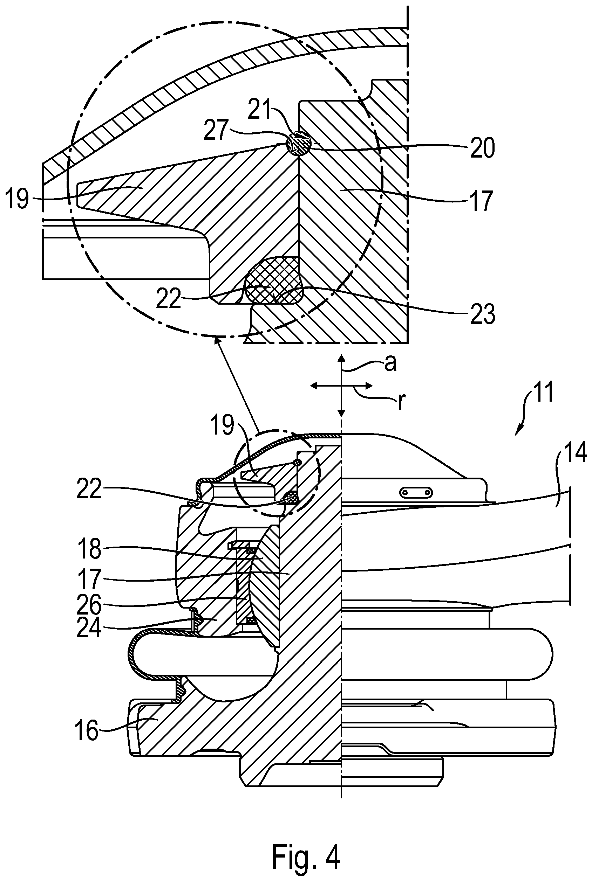

Fig. 4 zeigt ein Zentralgelenk 11, das sich von dem in Fig. 3 dargestellten Zentralgelenk 11 darin unterscheidet, dass die Verliersicherung 19, bei Betrachtung in einer Parallelprojektion in Axialrichtung a, Teile einer Innenkontur eines Gehäuses 24 des Zentralgelenks 11 überdeckt. Diese Anordnung hat den Vorteil, dass eine Separation des Zentralgelenks 11 verhindert wird, falls sich die Gelenkkugel 18 verschleißbedingt aus einer die Gelenkkugel 18 einfassenden Lagerschale 26 lösen sollte. Die Lagerschale 26 ist Bestandteil eines Kugelgelenks, wobei das Kugelgelenk gebildet ist aus der Gelenkkugel 18, die auch als Innenring des Kugelgelenks bezeichnet wird, und aus der Lagerschale 26, die auch als Außenring des Kugelgelenks bezeichnet wird.

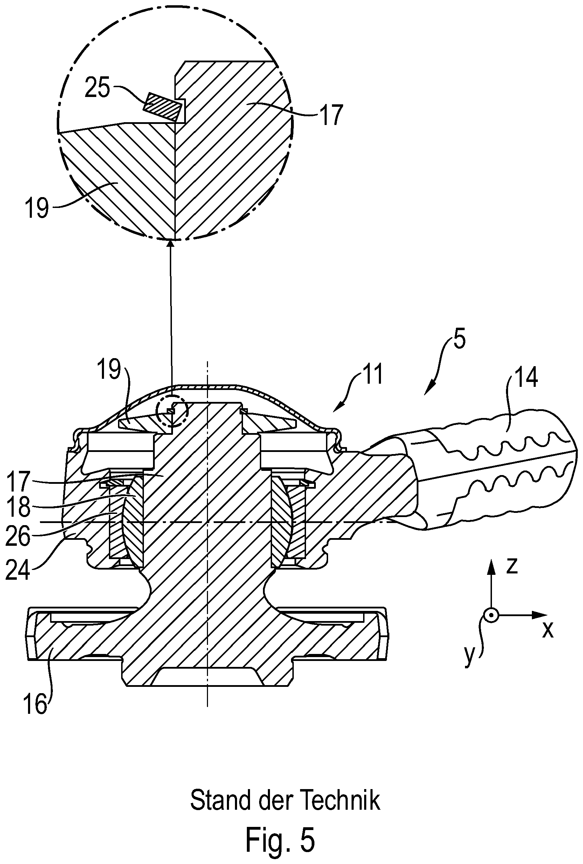

Ein in Fig. 5 dargestelltes, aus dem Stand der Technik bekanntes, Zentralgelenk 11 eines Dreipunktlenkers 5 weist ein Gehäuse 24 auf, das durch ein Kugelgelenk dreh- und schwenkbeweglich gegenüber einer Achsanbindung des Zentralgelenks 11 gelagert ist. Ferner weist das Zentralgelenk 11 eine als Anschlag fungierende Verliersicherung 19 auf, die sich senkrecht zu der Mittelachse der Achsanbindung erstreckt und bei Versagen des Kugelgelenks ein Separieren von Gehäuse 24 und Achsanbindung unterbindet. Ein Sicherungselement, das als ein Sicherungsring 25 mit rechteckigem Querschnitt ausgebildet ist, stellt eine Axialsicherung dar und verhindert ein Abziehen der Verliersicherung in Richtung der Mittelachse der Achsanbindung. Die Achsanbindung weist einen zylindrisch geformten Dom 17 auf, der eine Mittelachse aufweist, die deckungsgleich mit der Mittelachse der Achsanbindung ist. Der Sicherungsring 25 mit rechteckigem Querschnitt greift in eine umlaufende, ebenfalls rechteckig ausgebildete, Nut 21 des zylindrischen Doms 17 ein. Bei einer derartigen Anordnung besteht in einem Fahrbetrieb die Gefahr eines sogenannten Ausknüpfens des Sicherungsrings, wie in einer Detailvergrößerung schematisch dargestellt.

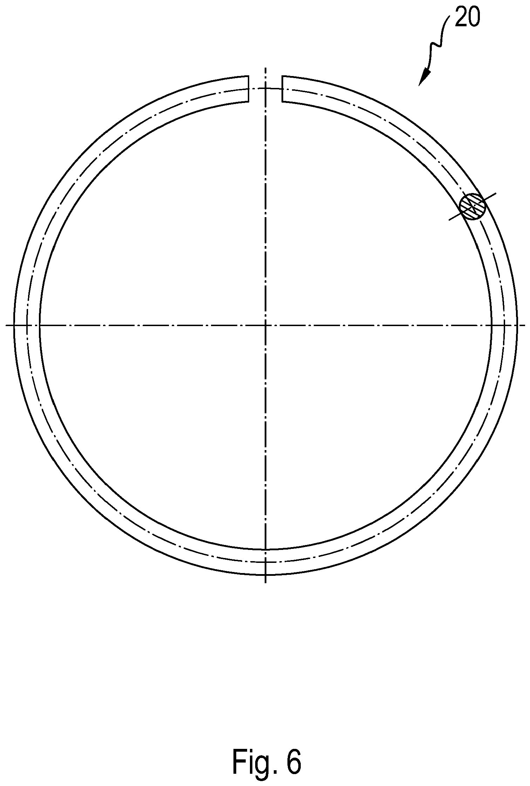

Wie in Fig. 6 zu erkennen, weist das ringförmige Sicherungselement 20 der Zentralgelenke 11 gemäß Fig. 3 und Fig. 4 einen kreisrunden Vollquerschnitt auf und ist zugleich als ein umfänglich unterbrochener Torus aus einem hochfesten Federstahl ausgebildet. Geometrisch entspricht das ringförmige Sicherungselement 20 einem ein Runddraht-Sprengring für Wellen gemäß DIN 7993, Form A.

### Bezugszeichen

- 1: Fahrwerkanordnung
- 2: Starrachskörper
- 3: Querträger
- 4: Stütze
- 5: Dreipunktlenker, Achsführungslenker
- 6: Längslenker
- 7: unterer Krafteinleitungsbereich
- 9: Längsträger
- 10: Fahrzeugrahmen
- 11: Zentralgelenk
- 12: Luftfeder
- 13: Lenkerarm
- 14: Schaft des Zentralgelenks
- 15: Führungsgelenk, Molekulargelenk
- 16: Flanschplatte
- 17: zylindrischer Dom
- 18: Gelenkkugel
- 19: Verliersicherung
- 20: ringförmiges Sicherungselement
- 21: umlaufende Nut
- 22: Federelement, O-Ring
- 23: Absatz
- 24: Gehäuse
- 25: Sicherungsring
- 26: Lagerschale
- 27: Kontaktfläche

- x: Fahrtrichtung, Fahrzeuglängsrichtung
- y: Fahrzeugquerrichtung
- z: Fahrzeughochrichtung
- a: Axialrichtung
- r: Radialrichtung

## Patentansprüche

1. Dreipunktlenker (5) aufweisend zwei Lenkerarme (13), die einen spitzen Winkel zueinander einschließen und die sich zugleich mit jeweils einem Ende in einem Zentralgelenk (11) treffen,
- wobei das Zentralgelenk (11) einen zylindrischen Dom (17) aufweist, der sich in einer Axialrichtung (a) erstreckt, die sich zumindest im Wesentlichen senkrecht zu einer durch die beiden Lenkerarme (13) aufgespannten Ebene erstreckt,
- wobei das Zentralgelenk (11) eine Gelenkkugel (18) aufweist, die von dem Dom (17) durchdrungen ist,
- wobei das Zentralgelenk (11) weiterhin, zur Unterbindung einer vollständigen Separation desselben, eine als Anschlag fungierende Verliersicherung (19) aufweist, die sich in einer senkrecht zu der Axialrichtung (a) orientierten Radialrichtung (r) erstreckt,
- wobei die Verliersicherung (19) ebenfalls von dem Dom (17) durchdrungen ist und zugleich durch ein ringförmiges Sicherungselement (20) gegen ein axiales Abziehen von dem Dom (17) gesichert ist,
- wobei das ringförmige Sicherungselement (20), bei Betrachtung in Axialrichtung (a), auf einer der Gelenkkugel (18) abgewandten Seite der Verliersicherung (19) angeordnet ist und zugleich in eine umlaufende Nut (21) des Doms (17) eingreift,
**dadurch gekennzeichnet, dass** das ringförmige Sicherungselement (20) in der Radialrichtung (r) von der Verliersicherung (19) anliegend eingefasst ist, so dass ein Ausknüpfen des ringförmigen Sicherungselements (20) aus der umlaufenden Nut (21) des Doms (17) unterbunden ist, weil sich das ringförmige Sicherungselement (20) in der Radialrichtung (r) nicht aus der umlaufenden Nut (21) des Doms (17) herausbewegen kann.

2. Dreipunktlenker (5) nach Anspruch 1, **dadurch gekennzeichnet, dass** das ringförmige Sicherungselement (20) in der Radialrichtung (r) zumindest im Wesentlichen umlaufend von der Verliersicherung (19) eingefasst ist.

3. Dreipunktlenker (5) nach Anspruch 1 oder 2, **dadurch gekennzeichnet, dass** das ringförmige Sicherungselement (20) einen kreisrunden Vollquerschnitt aufweist.

4. Dreipunktlenker (5) nach einem der vorhergehenden Ansprüche, **dadurch gekennzeichnet, dass** die Verliersicherung (19) vollflächig an dem ringförmigen Sicherungselement (20) anliegt.

5. Dreipunktlenker (5) nach einem der vorhergehenden Ansprüche, **dadurch gekennzeichnet, dass** das ringförmige Sicherungselement (20) vollflächig an der umlaufenden Nut (21) des zylindrischen Doms (17) anliegt.

6. Dreipunktlenker (5) nach einem der vorhergehenden Ansprüche, **dadurch gekennzeichnet, dass** das ringförmige Sicherungselement (20) unter Ausbildung einer den Dom (17) zumindest im Wesentlichen umlaufenden Kontaktfläche (27) an der Verliersicherung (19) anliegt, wobei die Kontaktfläche (27), bei Betrachtung in einem Axialschnitt durch das Zentralgelenk (11), als ein Viertelkreisbogen ausgebildet ist.

7. Dreipunktlenker (5) nach einem der vorhergehenden Ansprüche, **dadurch gekennzeichnet, dass** die Verliersicherung (19) durch ein Federelement (22) in der Axialrichtung (a) vorgespannt ist.

8. Dreipunktlenker (5) nach Anspruch 7, **dadurch gekennzeichnet, dass** das Federelement als ein O-Ring (22) aus einem Elastomermaterial ausgebildet ist.

9. Dreipunktlenker (5) nach einem der vorhergehenden Ansprüche, **dadurch gekennzeichnet, dass** ein die Verliersicherung (19) in der Axialrichtung (a) vorspannendes Federelement (22) zur Ermöglichung einer Montage des ringförmigen Sicherungselements (20) in Axialrichtung (a) um mindestens die halbe, in Axialrichtung (a) gemessene, Dicke des ringförmigen Sicherungselements (20) zusammendrückbar ist.

10. Dreipunktlenker (5) nach einem der Ansprüche 7 bis 9, **dadurch gekennzeichnet, dass** das Federelement (22) sowohl von dem Dom (17) als auch von der Verliersicherung (19) jeweils in Axialrichtung (a) und zugleich auch in Radialrichtung (r) eingefasst ist.

11. Dreipunktlenker (5) nach einem der vorhergehenden Ansprüche, **dadurch gekennzeichnet, dass** ein die Verliersicherung (19) in der Axialrichtung (a) vorspannendes Federelement (22) zwischen der Verliersicherung (19) und einem umlaufenden Absatz (23) des Doms (17) angeordnet ist.

12. Dreipunktlenker (5) nach Anspruch 11, **dadurch gekennzeichnet, dass** die Verliersicherung (19) im Bereich des umlaufenden Absatzes (23) des Doms (17) einen Innendurchmesser aufweist, der größer ist als ein Außendurchmesser des umlaufenden Absatzes (23) des Doms (17).

13. Dreipunktlenker (5) nach einem der vorhergehenden Ansprüche, **dadurch gekennzeichnet, dass** der Dreipunktlenker (5) als ein Achsführungslenker zur Führung einer Starrachse ausgebildet ist.

14. Dreipunktlenker (5) nach Anspruch 13, **dadurch gekennzeichnet, dass** der Dom (17) einstückig mit einer Flanschplatte (16) zur Anbindung des Zentralgelenks (11) an die Starrachse ausgebildet ist.

## Claims

1. Three-point link (5) having two link arms (13) which include an acute angle with one another and which, at the same time, meet in a central joint (11) by way of in each case one end,
- wherein the central joint (11) has a cylindrical dome (17) which extends in an axial direction (a) extending at least substantially perpendicularly to a plane spanned by the two link arms (13),
- wherein the central joint (11) has a joint ball (18) which is passed through by the dome (17),
- wherein the central joint (11) furthermore, to prevent a complete separation thereof, has a captive retention means (19) which functions as a stop and which extends in a radial direction (r), which is oriented perpendicularly to the axial direction (a),
- wherein the captive retention means (19) is likewise passed through by the dome (17) and, at the same time, is secured by an annular securing element (20) against being pulled axially off from the dome (17),
- wherein the annular securing element (20), when viewed in the axial direction (a), is arranged on a side of the captive retention means (19) facing away from the joint ball (18) and, at the same time, engages into an encircling groove (21) of the dome (17),
**characterized in that** the annular securing element (20) is bound in an abutting manner in the radial direction (r) by the captive retention means (19) such that disengagement of the annular securing element (20) from the encircling groove (21) of the dome (17) is prevented because the annular securing element (20) cannot move out of the encircling groove (21) of the dome (17) in the radial direction (r).

2. Three-point link (5) according to Claim 1, **characterized in that** the annular securing element (20) is bound in an at least substantially encircling manner in the radial direction (r) by the captive retention means (19).

3. Three-point link (5) according to Claim 1 or 2, **characterized in that** the annular securing element (20) has a circular solid cross section.

4. Three-point link (5) according to one of the preceding claims, **characterized in that** the captive retention means (19) abuts with full surface contact against the annular securing element (20).

5. Three-point link (5) according to one of the preceding claims, **characterized in that** the annular securing element (20) abuts with full surface contact against the encircling groove (21) of the cylindrical dome (17).

6. Three-point link (5) according to one of the preceding claims, **characterized in that** the annular securing element (20) abuts against the captive retention means (19) such that a contact surface (27) at least substantially encircling the dome (17) is formed, wherein the contact surface (27), when viewed in an axial section through the central joint (11), is in the form of a quadrant-shaped arc.

7. Three-point link (5) according to one of the preceding claims, **characterized in that** the captive retention means (19) is preloaded in the axial direction (a) by a spring element (22).

8. Three-point link (5) according to Claim 7, **characterized in that** the spring element is designed as an O-ring (22) composed of an elastomer material.

9. Three-point link (5) according to one of the preceding claims, **characterized in that**, to allow the annular securing element (20) to be fitted, a spring element (22) preloading the captive retention means (19) in the axial direction (a) is able to be compressed in the axial direction (a) by at least half the thickness, measured in the axial direction (a), of the annular securing element (20).

10. Three-point link (5) according to one of Claims 7 to 9, **characterized in that** the spring element (22) is bound both by the dome (17) and by the captive retention means (19), in each in the axial direction (a) and, at the same time, also in the radial direction (r).

11. Three-point link (5) according to one of the preceding claims, **characterized in that** a spring element (22) preloading the captive retention means (19) in the axial direction (a) is arranged between the captive retention means (19) and an encircling shoulder (23) of the dome (17).

12. Three-point link (5) according to Claim 11, **characterized in that**, in the region of the encircling shoulder (23) of the dome (17), the captive retention means (19) has an inner diameter which is greater than an outer diameter of the encircling shoulder (23) of the dome (17).

13. Three-point link (5) according to one of the preceding claims, **characterized in that** the three-point link (5) is designed as an axle-guidance link for guidance of a rigid axle.

14. Three-point link (5) according to Claim 13, **characterized in that** the dome (17) is formed in one piece with a flange plate (16) for attachment of the central link (11) to the rigid axle.

## Revendications

1. Bras de suspension à trois points (5) présentant deux bras oscillants (13) qui forment un angle aigu l'un par rapport à l'autre et qui se rencontrent en même temps respectivement par une extrémité dans une articulation centrale (11),
- l'articulation centrale (11) présentant un dôme cylindrique (17) qui s'étend dans une direction axiale (a) qui s'étend au moins sensiblement perpendiculairement à un plan défini par les deux bras oscillants (13),
- l'articulation centrale (11) présentant une rotule d'articulation (18) qui est traversée par le dôme (17),
- l'articulation centrale (11) présentant en outre, pour empêcher une séparation complète de celle-ci, un dispositif anti-perte (19) fonctionnant en tant que butée, lequel s'étend dans une direction radiale (r) orientée perpendiculairement à la direction axiale (a),
- le dispositif anti-perte (19) étant traversé également par le dôme (17) et étant en même temps protégé contre un retrait axial du dôme (17) au moyen d'un élément de fixation annulaire (20),
- l'élément de fixation annulaire (20), considéré dans la direction axiale (a), étant disposé sur un côté du dispositif anti-perte (19) opposé à la rotule d'articulation (18) et venant en prise en même temps dans une rainure périphérique (21) du dôme (17),
**caractérisé en ce que** l'élément de fixation annulaire (20) est étroitement entouré dans la direction radiale (r) par le dispositif anti-perte (19) de sorte qu'une sortie de l'élément de fixation annulaire (20) hors de la rainure périphérique (21) du dôme (17) soit empêchée, car l'élément de fixation annulaire (20) ne peut pas se déplacer hors de la rainure périphérique (21) du dôme (17) dans la direction radiale (r).

2. Bras de suspension à trois points (5) selon la revendication 1, **caractérisé en ce que** l'élément de fixation annulaire (20) est entouré dans la direction radiale (r) au moins sensiblement de manière périphérique par le dispositif anti-perte (19).

3. Bras de suspension à trois points (5) selon la revendication 1 ou 2, **caractérisé en ce que** l'élément de fixation annulaire (20) présente une section transversale complète circulaire.

4. Bras de suspension à trois points (5) selon l'une des revendications précédentes, **caractérisé en ce que** le dispositif anti-perte (19) s'appuie sur toute sa surface contre l'élément de fixation annulaire (20).

5. Bras de suspension à trois points (5) selon l'une des revendications précédentes, **caractérisé en ce que** l'élément de fixation annulaire (20) s'appuie sur toute sa surface contre la rainure périphérique (21) du dôme cylindrique (17).

6. Bras de suspension à trois points (5) selon l'une des revendications précédentes, **caractérisé en ce que** l'élément de fixation annulaire (20) s'appuie contre le dispositif anti-perte (19) en formant une surface de contact (27) entourant au moins sensiblement le dôme (17), la surface de contact (27), considérée en coupe axiale à travers l'articulation centrale (11), étant réalisée sous la forme d'un quart d'arc de cercle.

7. Bras de suspension à trois points (5) selon l'une des revendications précédentes, **caractérisé en ce que** le dispositif anti-perte (19) est précontraint dans la direction axiale (a) au moyen d'un élément ressort (22).

8. Bras de suspension à trois points (5) selon la revendication 7, **caractérisé en ce que** l'élément ressort est réalisé sous la forme d'un joint torique (22) constitué d'une matière élastomère.

9. Bras de suspension à trois points (5) selon l'une des revendications précédentes, **caractérisé en ce qu'**un élément ressort (22) précontraignant le dispositif anti-perte (19) dans la direction axiale (a), pour permettre un montage de l'élément de fixation annulaire (20), peut être comprimé dans la direction axiale (a) d'au moins la moitié de l'épaisseur, mesurée dans la direction axiale (a), de l'élément de fixation annulaire (20).

10. Bras de suspension à trois points (5) selon l'une des revendications 7 à 9, **caractérisé en ce que** l'élément ressort (22) est entouré à la fois par le dôme (17) et par le dispositif anti-perte (19) respectivement dans la direction axiale (a) et en même temps aussi dans la direction radiale (r).

11. Bras de suspension à trois points (5) selon l'une des revendications précédentes, **caractérisé en ce qu'**un élément ressort (22) précontraignant le dispositif anti-perte (19) dans la direction axiale (a) est disposé entre le dispositif anti-perte (19) et un épaulement périphérique (23) du dôme (17).

12. Bras de suspension à trois points (5) selon la revendication 11, **caractérisé en ce que** le dispositif anti-perte (19) présente, dans la région de l'épaulement périphérique (23) du dôme (17), un diamètre intérieur qui est supérieur à un diamètre extérieur de l'épaulement périphérique (23) du dôme (17).

13. Bras de suspension à trois points (5) selon l'une des revendications précédentes, **caractérisé en ce que** le bras de suspension à trois points (5) est réalisé sous la forme d'un bras de suspension de guidage d'essieu servant au guidage d'un essieu rigide.

14. Bras de suspension à trois points (5) selon la revendication 13, **caractérisé en ce que** le dôme (17) est réalisé d'une seule pièce avec une plaque de bride (16) servant à la connexion de l'articulation centrale (11) à l'essieu rigide.
